# FASCICULE DE BREVET EUROPEEN

(11) **EP 1 518 126 B1**
(45) Date de publication et mention de la délivrance du brevet: **02.01.2008**
(21) Numéro de dépôt: 03762710.6
(22) Date de dépôt: 27.06.2003
(51) Int. Cl.: G01P 3/44, G01P 3/488, G01P 3/49, G01D 5/20

(54) **DISPOSITIF DE PALIER A ROULEMENT EQUIPE D'UN CAPTEUR ET MOTEUR ELECTRIQUE AINSI EQUIPE**
MIT EINEM SENSOR AUSGESTATTETES WÄLZLAGER UND DAMIT AUSGERÜSTETER ELEKTROMOTOR
ROLLER BEARING EQUIPPED WITH A SENSOR AND ELECTRICAL MOTOR EQUIPPED THEREWITH

(30) Priorité: 02.07.2002 FR 0208263
(43) Date de publication de la demande: 30.03.2005
(73) Titulaire: Aktiebolaget SKF, 415 50 Göteborg (SE)
(72) Inventeur: GALLION, Samuel, F-37000 Tours (FR); LAUFERON, Patrick, F-37360 Sonzay (FR)
(74) Mandataire: Casalonga, Axel
(86) Numéro de dépôt international: PCT/FR2003/001985
(87) Numéro de publication internationale: WO 2004/005937

(56) Documents cités:
- EP-A- 1 164 358
- DE-A- 10 011 820
- FR-A- 2 655 735
- GB-A- 2 156 082
- GB-A- 2 312 290
- ALLAN R: "COIL-BASED MICROMACHINED SENSOR MEASURES SPEED AND POSITION FOR AUTOMOTIVE APPLICATIONS" ELECTRONIC DESIGN, PENTON PUBLISHING, CLEVELAND, OH, US, vol. 44, no. 26, 16 décembre 1996 (1996-12-16), pages 34-35,37, XP000682027 ISSN: 0013-4872

## Description

L'invention concerne un palier à roulement dans lequel un organe tournant du palier porte un codeur et un organe non tournant du palier porte un capteur dans le but de déterminer certains paramètres de rotation comme la vitesse ou la position angulaire de l'élément tournant supportant le codeur.

De tels dispositifs trouvent leur application dans de nombreux domaines, tels que les moteurs électriques dans lesquels ils sont amenés à fonctionner dans des conditions sévères de vitesse et de température.

On connaît par le document FR-A-2 754 903, un palier à roulement comprenant un capteur solidaire de la bague non tournante, de type sonde à effet Hall, et un codeur solidaire de la bague tournante défilant en rotation avec un faible entrefer par rapport au capteur tout en étant capable de produire dans le capteur un signal périodique de fréquence proportionnelle à la vitesse de rotation de la bague tournante.

Le codeur comprend une partie active annulaire réalisée avec un plasto-aimant et pourvue d'une zone active disposée en regard du capteur, complétée par une partie de renforcement composée de deux éléments annulaires disposés en contact avec la partie active, de chaque côté de la zone active. Un tel roulement donne généralement satisfaction, notamment dans le domaine des moteurs électriques. Toutefois, ce type de codeur ne peut pas fonctionner à des températures élevées, au-delà de 120°. Le capteur et le codeur ne fonctionnent pas de façon satisfaisante s'ils sont soumis à des champs magnétiques externes de forte intensité, par exemple les champs magnétiques induits par les bobines du stator des moteurs électriques et/ou par le frein électromagnétique intégré dans lesdits moteurs. Enfin, la compacité axiale du palier à roulement ainsi instrumenté n'est pas optimale et ne facilite pas son intégration.

Dans les moteurs électriques asynchrones de forte puissance, le pilotage du moteur nécessite une détection des paramètres de rotation du moteur. On doit en effet connaître la vitesse et le sens de rotation du rotor pour pouvoir adapter la fréquence, l'intensité et le sens du courant entrant dans les bobines du stator. L'utilisation d'un codeur de type multipolaire associé à une sonde à effet Hall, ne peut convenir que pour des applications dans lesquelles la puissance et les exigences de précision de pilotage sont relativement faibles, par exemple pour un moteur de ventilateur qui fonctionne à vitesse constante en utilisation.

On connaît aussi les systèmes capteurs codeurs de type optique, par exemple les encodeurs industriels, mais qui ne sont pas susceptibles d'être intégrés dans un moteur, qui demandent un interfaçage mécanique d'entraînement par le moteur électrique et qui sont relativement sensibles aux chocs et à la température.

Le document DE 100 11 820 décrit un dispositif de mesure pour palier à roulement comprenant une bobine recevant un signal électromagnétique en provenance d'un codeur et interagissant électromagnétiquement avec une bobine d'un capteur, le capteur étant séparé du roulement.

L'article « Coil-based micromachined sensor measures speed and position for automotive applications », Electronic Design, Pcnton Publishing, Cleveland, OH, US, vol. 44, No. 26, 16 décembre 1996, pages 34-35, 37, XP000682027 ISSN : 0013-4872, décrit un système de capteur inductif comprenant une bobine de génération et deux bobines de détection les unes à côté des autres. Ce document vise à réduire l'encombrement, le coût et la pollution par des projections extérieures pour une application de type ABS.

Le document GB 2 312 290 décrit un palier à roulement équipé d'un capteur de vitesse de rotation pour ABS. Le palier à roulement comprend une bague intérieure, une bague extérieure, une roue phonique solidaire de la bague intérieure et un capteur supporté sur l'intérieur d'un capot monté sur la bague extérieure. Le capteur est noyé dans de la résine synthétique. Le capteur comprend un aimant permanent, une cellule à effet Hall ou un autre élément de détection tel qu'un élément de résistance magnétique.

Le document FR 2 655 735 décrit un dispositif de capteur de vitesse de rotation comprenant un élément formant stator muni d'un enroulement constitué par un conducteur en méandre sur un circuit imprimé constitué par un élément en feuille mince souple susceptible d'épouser la forme de l'élément formant stator et fixé sur ce dernier de préférence par collage. Le capteur est pourvu d'un ou deux coudes à 90°.

L'invention propose un palier à roulement instrumenté très compact axialement, apte à fonctionner à des températures élevées tout en effectuant une détection précise, y compris lorsqu'ils sont soumis à des champs magnétiques intenses.

Le dispositif de roulement instrumenté, selon un aspect de l'invention, comprend une partie tournante avec au moins une bague, une partie non tournante avec au moins une bague, et un ensemble de détection de paramètres de rotation comprenant un codeur et un capteur solidaire de ladite partie non tournante et pourvu d'une partie de détection montée sur une bague de la partie non tournante, la partie de détection comprenant un bloc-capteur et étant reliée ù un câble de transmission. Le capteur comprend au moins une microbobine de réception et une microbobine d'émission. Lesdites microbobines sont à enroulement sensiblement plan. Lesdites microbobines sont disposées sur un support d'un circuit monté dans le bloc-capteur de la partie non tournante de façon que lesdites microbobines viennent axialement en regard du codeur, le support étant un substrat de circuit imprimé. Ladite microbobine d'émission entoure la ou les microbobine de réception.

On bénéficie ainsi d'une compacité axiale satisfaisante.

Dans un mode de réalisation, le dispositif comprend une pluralité de microbobines de réception sensiblement coplanaires radiales. Le capteur peut ainsi réaliser une détection précise.

Dans un autre mode de réalisation de l'invention, le dispositif comprend une pluralité de microbobines de réception disposées selon une pluralité de plans radiaux parallèles. On peut ainsi disposer d'un nombre plus élevé de bobines de réception assurant une précision accrue.

La bobine d'émission peut également être une microbobine, de préférence à enroulement plan.

La bobine d'émission, la bobine de réception et le circuit de traitement de données disposés sur le support permettent de conserver une compacité axiale satisfaisante. Les bobines peuvent être réalisées en technologie circuit imprimé. Le support peut être un substrat de circuit imprimé sous la forme d'une plaque de résine. En d'autres termes, le capteur comprend des éléments, actifs et/ou passifs, réunis en un seul module solidaire de la partie non tournante.

Avantageusement, le dispositif comprend une pluralité de microbobines associées par paires et décalées angulairement afin de générer un signal différentiel. Le codeur peut comprendre une roue codeuse dont la zone active est réalisée en un métal électriquement conducteur.

Avantageusement, le codeur comprend un circuit imprimé dont le substrat est de forme annulaire et est pourvu de secteurs métallisés et de secteurs non métallisés. Le circuit imprimé peut être monté sur une bague non tournante du roulement.

Dans un autre mode de réalisation de l'invention, le codeur comprend une roue codeuse à fenêtres ou à dents fixée sur une bague tournante du roulement. Le codeur peut être réalisé de façon monobloc. Le codeur peut être réalisé en tôle emboutie. Un tel codeur est susceptible de fonctionner à des températures élevées. On entend ici par fenêtres, des trous formés dans le codeur entre deux parties circonférentiellement continues. On entend par dents des portions de matière qui sont solidaires d'une partie circonférentiellement continue du codeur. Le codeur peut comprendre une partie axiale emmanchée sur une portée cylindrique de la bague tournante et une partie radiale dirigée vers l'autre bague et dans laquelle sont formées les fenêtres ou les dents.

Pour des raisons de compacité, il est judicieux de prévoir qu'au moins une partie du codeur est disposée dans l'espace situé entre les bagues de roulement, c'est-à-dire radialement entre les surfaces cylindriques des bagues qui s'étendent entre les pistes de roulement et les surfaces frontales délimitant lesdites bagues, et axialement au droit desdites surfaces cylindriques, entre les éléments roulants et les surfaces radiales frontales des bagues du roulement.

Dans un autre mode de réalisation de l'invention le codeur est disposé en dehors de l'espace situé entre les bagues de roulement.

Dans un mode de réalisation de l'invention, le bloc-capteur est annulaire.

Dans un autre mode de réalisation de l'invention, le bloc-capteur occupe un secteur angulaire inférieur à 360°, par exemple de l'ordre de 120°.

Dans un mode de réalisation de l'invention, le circuit de traitement des données est une puce réalisée de façon spécifique (ASIC).

L'invention propose également un moteur électrique comprenant un rotor, un stator, au moins un roulement de support du rotor, et un ensemble capteur comprenant un codeur et un capteur.

Le capteur est solidaire de ladite partie non tournante et pourvu d'une partie de détection montée sur une bague de la partie non tournante, la partie de détection comprenant un bloc-capteur et étant reliée à un câble de transmission. Le capteur comprend au moins une microbobine de réception et une microbobine d'émission. Lesdites microbobines sont à enroulement sensiblement plan. Lesdites microbobines sont disposées sur un support d'un circuit monté dans le bloc-capteur de la partie non tournante de façon que lesdites microbobines viennent axialement en regard du codeur, le support étant un substrat de circuit imprimé. Ladite microbobine d'émission entoure la ou les microbobine de réception.

En général, le roulement comprendra une bague extérieure solidaire du stator et supportant le bloc-capteur et une bague intérieure tournante solidaire du rotor et supportant le codeur. Le moteur peut être de type asynchrone de forte puissance, dans lequel on souhaite réaliser un pilotage fin en mesurant de façon précise les paramètres de rotation.

On entend ici par microbobine, une bobine à enroulement formé sur un circuit, par exemple un serpentin de cuivre sur un substrat de circuit imprimé. L'épaisseur de la carte et de la microbobine est de l'ordre de 1 mm.

L'invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'un palier à roulement instrumenté, selon un mode de réalisation de l'invention ;
- la figure 2 est une vue partielle du capteur de la figure 1 ;
- la figure 3 est une vue de face en élévation du codeur de la figure 1 ;
- la figure 4 est une vue de face en élévation d'une variante de codeur ;
- la figure 5 est une vue en coupe axiale d'un palier à roulement instrumenté, selon un autre mode de réalisation de l'invention ;
- la figure 6 est une vue de face en élévation du codeur de la figure 5; et
- la figure 7 est un schéma électrique du capteur.

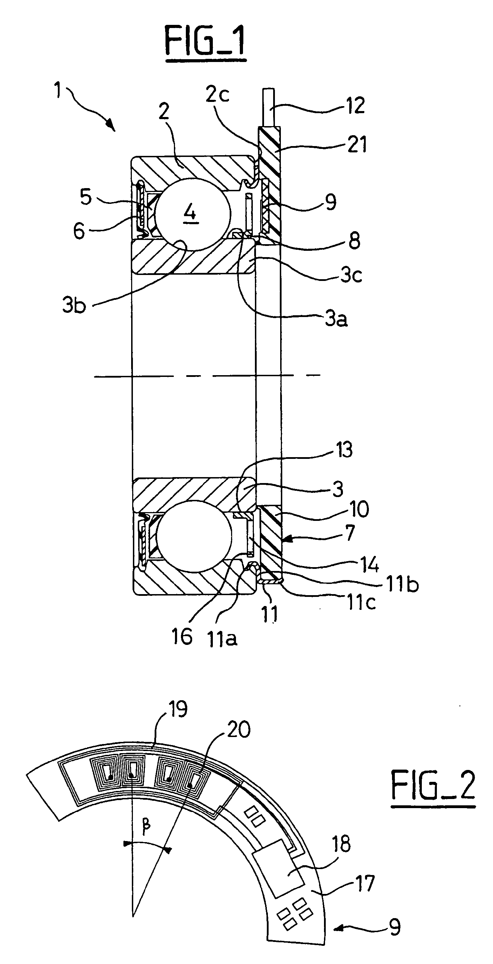

Tel qu'il est illustré sur la figure 1, le palier à roulement 1 comprend une bague extérieure 2, une bague intérieure 3, une rangée d'éléments roulants 4, ici des billes, disposés entre la bague extérieure 2 et la bague intérieure 3 et maintenus par une cage 5, un joint d'étanchéité 6 sur l'un de ses côtés, et sur le côté opposé un capteur de vitesse 5 solidaire de la bague extérieure 2 et un codeur 8 solidaire de la bague intérieure 3.

Dans le mode de réalisation représenté, la bague extérieure est non tournante et la bague intérieure est tournante. Toutefois, la disposition inverse est parfaitement envisageable.

Le capteur 7 comprend une partie de détection 9 illustrée plus en détail sur la figure 2, un bloc-support 10 en matériau synthétique, et un élément métallique 11 emmanché sur une portée de la bague extérieure 2, ici dans la rainure servant habituellement à la fixation du joint d'étanchéité prévue dans les roulements non instrumentés. Un câble 12 relié à la partie de détection 9 permet de transmettre des informations de vitesse, de position ou plus généralement des paramètres de rotation à d'autres unités aptes à exploiter de telles données et qui n'ont pas été représentées.

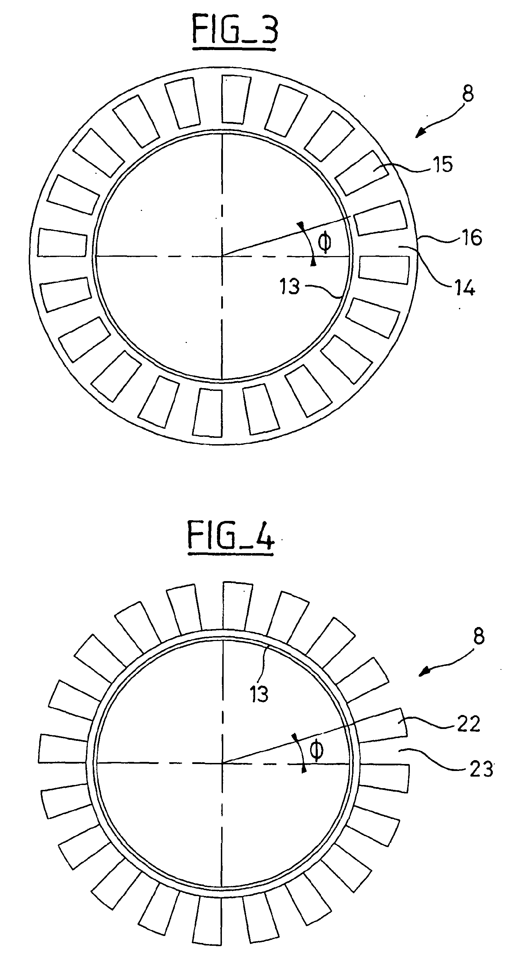

Le codeur 8, voir figures 1 et 3, comprend une partie de support 13 et une partie opérationnelle 14. La partie de support 13 est de forme tubulaire emmanchée sur une portée cylindrique 3a de la bague intérieure 3 formée entre la piste de roulement 3b qui est en contact avec les éléments roulants 4 et une surface radiale 3c qui forme l'extrémité de la bague intérieure 3 dans le sens axial du côté du capteur.

La partie opérationnelle 14 est radiale et présente une pluralité de fenêtres 15, de forme rectangulaire, allongées radialement et qui laissent subsister à l'extrémité de grand diamètre de la partie opérationnelle 14 une portion continue circulaire 16. La partie opérationnelle 14 et la partie de support 13 sont réalisées de façon monobloc, d'où une construction économique et particulièrement robuste. Le codeur 8 peut être réalisé à partir d'une tôle métallique au moyen d'étapes d'emboutissage et de poinçonnage.

On remarque que la partie opérationnelle 14 est légèrement en retrait par rapport à la surface radiale 3c de la bague intérieure 3. Le codeur 8 est donc particulièrement compact et se trouve disposé dans l'espace défini radialement entre les bagues 2 et 3 du roulement et axialement entre les éléments roulants 4 et le plan radial par lequel passent les surfaces d'extrémité 2c, 3c desdites bagues 2 et 3.

La partie de détection 9 du capteur 7 comprend un support 17 sur lequel sont montés un circuit intégré 18, par exemple de type ASIC, et qui est destiné au traitement des données, une microbobine d'émission 19 dite aussi bobine d'excitation et quatre microbobines de réception 20. Le circuit comporte également un certain nombre d'éléments filtrants tels que capacités, résistances, etc., non représentées. La partie de détection 9 est disposée axialement à une faible distance de la partie opérationnelle 14 du codeur 8 et occupe un secteur angulaire de l'ordre de 120°, tout en étant insérée dans le bloc-support 10 qui est lui circulaire. On pourrait, si nécessaire, prévoir un secteur angulaire continu de 360°. La partie de détection 9 possède une face non recouverte par la matière du bloc-support 10 et orientée en regard du codeur 8.

Les microbobines 19 et 20 sont du type à enroulement plan et peuvent être du genre circuit imprimé ou encore circuit intégré. La planéité des enroulements assure une compacité axiale excellente au capteur 7. En outre, les bobines de réception 20 présentent un contour extérieur carré et sont disposées les unes à la suite des autres sur l'arc de cercle formé par le support 17, tandis que la bobine d'émission 19 entoure les bobines de réception 20 et présente une forme en arc de cercle. Les bobines 19 et 20 sont reliées au circuit de traitement des données 18, lui-même relié de façon non représentée au câble 12.

L'élément métallique 11 comprend une partie formant crochet 11a repliée dans la rainure de la bague extérieure 2 servant habituellement à l'accrochage d'un élément d'étanchéité qui, dans un roulement non instrumenté, est classiquement symétrique du joint d'étanchéité 6.

L'élément métallique 11 se complète par une courte portion radiale dirigée vers l'extérieur à partir de la portion 11a et en contact d'un côté avec la surface radiale d'extrémité 2c de la bague extérieure 2, et de l'autre côté avec le bloc-support 10 du capteur 7, et par une portion axiale 11c s'étendant à partir de l'extrémité libre de la portion radiale 11b qui entoure radialement le bloc-support 10, à l'exception de la zone de sortie du câble 12 où il est prévu que le bloc-support 10 s'étende vers l'extérieur, formant une protubérance 21 entourant le câble 12 et protégeant sa sortie.

Le bloc-support 10 est réalisé en matériau synthétique et présente une forme générale annulaire avec la protubérance 21 en saillie sur sa périphérie et un creux axial à partir de sa face radiale du côté du roulement qui constitue un logement pour la partie de détection 9 en la recouvrant sur sa face opposée au roulement et sur son épaisseur dans le sens radial. Le bloc-support 10 et la partie de détection 9 sont solidaires. A titre de variante, le bloc-support 10 pourrait être métallique.

Sur la figure 4, est illustrée une variante de codeur, dans laquelle la partie de support 13 est identique à celle du mode de réalisation précédent et la partie opérationnelle 14 orientée radialement vers l'extérieur à partir de la partie de support 13 est formée par une pluralité de dents 22, de forme générale rectangulaire, allongées radialement, dont la périphérie est circulaire et qui laissent entre elles des créneaux 23 de forme légèrement trapézoïdale.

Le mode de fonctionnement de l'ensemble capteur-codeur est semblable dans les deux modes de réalisation.

Les bobines réceptrices 20 sont excitées électriquement par la bobine d'émission 19 reliée à un circuit oscillant.

La bobine d'émission 19 génère par induction un signal électrique dans les bobines de réception 20.

Durant la rotation du codeur 8, le défilement des fenêtres et des portions pleines de la partie opérationnelle 14 devant les microbobines produit une variation de la masse métallique située devant chaque micro-bobine de réception 20.

Il en résulte dans lesdites bobines de réception 20 une variation de phase du signal électrique induit du fait des pertes par courants de Foucault.

Ces variations du signal électrique émises par les différentes bobines de réception 20 et traitées par le circuit 18 sont à la base de la génération de signaux représentatifs des paramètres de rotation du codeur 8 tel que la vitesse de rotation.

Le capteur à microbobines permet au roulement instrumenté de fournir des informations fiables, y compris lorsque des champs magnétiques de forte intensité sont présents.

Le codeur peut être réalisé en un matériau métallique électriquement conducteur et magnétique, comme l'acier, ou encore électriquement conducteur et amagnétique, comme l'aluminium ou le cuivre.

Les microbobines de réception 20 fonctionnent par paires pour fournir un signal différentiel. Les microbobines de réception 20 d'une paire sont décalées angulairement d'un angle noté β et le pas angulaire des fenêtres est noté φ. Une condition pour que le signal soit déphasé est que l'un de ces angles ne soit pas un multiple de l'autre. On a donc β ≠ a*φ avec a un entier quelconque, l'angle β étant généralement supérieur à φ. On pourra par exemple prendre β = (a+0,5)*φ ou β = (a+0,25)*φ.

Lorsque le codeur défile à rotation devant le capteur, les discontinuités de matière de la partie opérationnelle 14 provoquent des variations périodiques de la masse métallique qui se trouve en face des microbobines de réception 20. S'il n'y a pas de matière métallique devant chacune des bobines d'une paire de bobines de réception, la différence de phase entre les deux bobines différentielles est nulle. S'il existe de la matière métallique devant au moins une des deux bobines de réception formant une paire et que la matière métallique est répartie différemment devant chaque bobine, les pertes dues aux courants de Foucault dans la matière métallique vont générer une différence de phase des courants. Ce déphasage peut alors être traité et extrait de façon adéquate par le circuit de traitement 18, afin d'obtenir les informations désirées, comme la vitesse angulaire, le sens de rotation, la position, etc.

La génération du signal électronique ne dépend donc pas du niveau ou de la direction d'un champ magnétique capté par les microbobines, mais de la modification des courants induits par la bobine d'excitation 19 dans les bobines de réception 20 en présence des variations des masses métalliques conductrices électriquement défilant devant lesdites microbobines. Le signal est donc très peu sensible aux champs magnétiques extérieurs, ce qui confère au dispositif suivant l'invention une très bonne aptitude à fonctionner dans un milieu soumis à des champs magnétiques élevés tels que des moteurs électriques. Les bobines de réception 20 sont réparties sur le support 17 avec une position radiale et un pas angulaire adéquat pour coopérer avec la partie opérationnelle 14 du codeur 8 et fournir les signaux voulus. On peut, si nécessaire, augmenter le nombre de bobines de réception 20 dans le sens circonférentiel, ou encore utiliser un empilage de plusieurs bobines dans le sens axial, afin d'obtenir des signaux de plus forte puissance.

L'épaisseur des microbobines étant extrêmement faible, de même que celle du circuit de traitement 18, le capteur 7 a des dimensions axiales extrêmement réduites, permettant une intégration dans un bloc-capteur 10 présentant lui-même des dimensions axiales très faibles. De même, le codeur peut, de par sa structure, présenter une épaisseur axiale très faible et être intégré sans problème dans l'espace compris entre les bagues du roulement, de telle sorte que ledit codeur n'affecte pas les dimensions externes du roulement instrumenté.

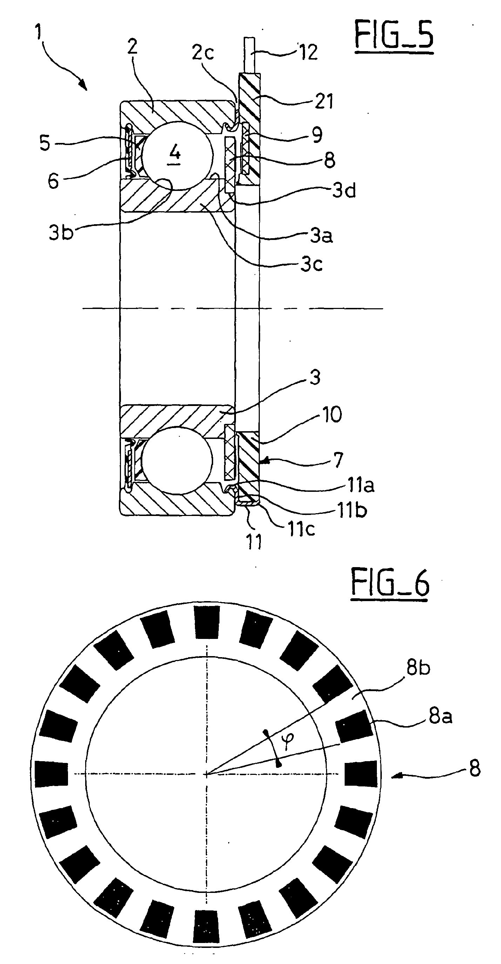

Les figures 5 et 6 montrent une variante avec un codeur 8 réalisé avec la technique du circuit imprimé. A partir d'un substrat conventionnel de circuit imprimé revêtu d'une mince couche métallique, en cuivre par exemple, on réalise un disque comportant une alternance de secteurs métallisés 8a et de secteurs non métallisés 8b. Le substrat est électriquement non conducteur et les secteurs métallisés 8a sont électriquement conducteurs.

Ce disque est fixé par des moyens appropriés (emmanchement et/ou collage) sur une partie axiale 3d réalisée à cet effet sur la bague tournante 3 du roulement 1. Ce type de roue codeuse présente peu d'inertie, une très grande compacité axiale et les contours des parties actives peuvent être réalisés avec une très grande précision. Le signal résultant est donc particulièrement fiable.

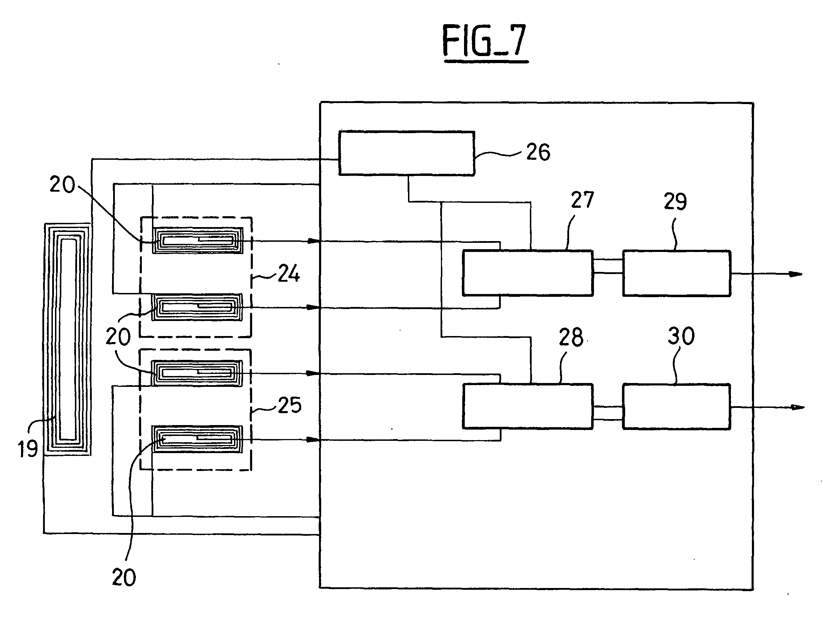

Sur la figure 7, sont illustrées de façon plus détaillée les fonctions électriques du système. On voit que les bobines de réception 20 sont groupées en deux paires référencées 24 et 25 et représentées par un cadre en traits discontinus. Pour la clarté du dessin, les paires 24 et 25 de bobines de réception sont représentées en dehors de la bobine excitatrice d'émission alors que dans la réalité elles sont situées à l'intérieur de ladite bobine d'émission 19.

Les bobines 19 et 20 sont reliées au circuit de traitement 18. Le circuit de traitement 18 comprend un oscillateur 26 dont la sortie est reliée à la bobine d'émission 19, deux démodulateurs de phase 27 et 28 reliés à la sortie de chacune des bobines de réception 20. Le circuit 18 comprend en outre deux comparateurs interpolateurs 29, 30, montés respectivement en sortie des démodulateurs de phase 27 et 28. En sortie, le circuit de traitement 18 émet un signal numérique représentatif d'au moins un paramètre de rotation du roulement, tel que la vitesse, la position, le sens de rotation, l'accélération, etc.

On réalise ainsi un roulement instrumenté facilement intégrable dans un ensemble mécanique du fait de son faible encombrement, apte à fonctionner à des températures élevées, telles que celles régnant dans un moteur électrique, et apte à fonctionner dans un environnement soumis à des champs magnétiques de forte puissance.

Ces qualités confèrent au roulement instrumenté, selon l'invention, des aptitudes intéressantes pour son utilisation dans un moteur électrique asynchrone de forte puissance, le roulement instrumenté pouvant remplir à la fois la fonction mécanique de palier et les fonctions électroniques de détection nécessaires au pilotage du moteur.

## Revendications

1. Dispositif de roulement instrumenté, comprenant une partie tournante avec au moins une bague, une partie non tournante avec au moins une bague, et un ensemble de détection de paramètres de rotation comprenant un codeur (8) et un capteur (7) solidaire de ladite partie non tournante et pourvu d'une partie de détection (9) montée sur une bague de la partie non tournante, la partie de détection comprenant un bloc-capteur (10) et étant reliée à un câble (12) de transmission, **caractérisé par le fait que** le capteur comprend au moins une microbobine de réception (20) et une microbobine d'émission (19), toutes les deux à enroulement sensiblement plan, lesdites microbobines étant disposées sur un support (17) d'un circuit (18) monté dans le bloc-capteur (10) de la partie non tournante de façon que lesdites microbobines viennent axialement en regard du codeur (8), le support (17) étant un substrat de circuit imprimé, ladite microbobine d'émission (19) entourant la ou les microbobine de réception (20).

2. Dispositif selon la revendication 1, **caractérisé par le fait qu'**il comprend une pluralité de microbobines de réception sensiblement coplanaires radiales.

3. Dispositif selon la revendication 1, **caractérisé par le fait qu'**il comprend une pluralité de microbobines de réception disposées selon une pluralité de plans radiaux parallèles.

4. Dispositif selon l'une quelconque des revendications précédentes, **caractérisé par le fait qu'**il comprend une pluralité de microbobines associées par paires (24, 25) afin de générer un signal différentiel.

5. Dispositif selon l'une quelconque des revendications précédentes, **caractérisé par le fait que** le codeur comprend une roue codeuse dont la zone active est réalisée en un métal électriquement conducteur.

6. Dispositif selon l'une quelconque des revendications précédentes, **caractérisé par le fait que** le codeur comprend une roue codeuse à fenêtres ou à dents fixée sur une bague tournante (3) du roulement.

7. Dispositif selon l'une quelconque des revendications 1 à 5, **caractérisé par le fait que** le codeur comprend un circuit imprimé dont le substrat annulaire est pourvu de secteurs métallisés et de secteurs non métallisés.

8. Dispositif selon la revendication 7, **caractérisé par le fait que** le circuit imprimé est monté sur une bague tournante du roulement.

9. Dispositif selon l'une quelconque des revendications précédentes, **caractérisé par le fait qu'**au moins une partie du codeur est disposée dans l'espace situé entre les bagues de roulement.

10. Dispositif selon l'une quelconque des revendications précédentes, **caractérisé par le fait que** le codeur est disposé en dehors de l'espace situé entre les bagues de roulement.

11. Dispositif selon l'une quelconque des revendications précédentes, **caractérisé par le fait que** le bloc-capteur est annulaire.

12. Dispositif selon l'une quelconque des revendications 1 à 10, **caractérisé par le fait que** le bloc-capteur occupe un secteur angulaire inférieur à 360°.

13. Moteur électrique comprenant un rotor, un stator, au moins un roulement (1) de support du rotor, et un ensemble de détection de paramètres de rotation comprenant un codeur (8) et un capteur (7) pourvu d'une partie de détection (9) montée sur une bague de la partie non tournante, la partie de détection comprenant un bloc-capteur (10) et étant reliée à un câble (12) de transmission, **caractérisé par le fait que** le capteur (7) comprend au moins une microbobine de réception (20) et une microbobine d'émission (19), toutes les deux à enroulement sensiblement plan, lesdites microbobines étant disposées sur un support (17) d'un circuit (18) monté dans le bloc-capteur (10) solidaire du stator de façon que lesdites microbobincs viennent axialement en regard du codeur, le support (17) étant un substrat de circuit imprimé, ladite microbobine d'émission (19) entourant la ou les microbobine de réception (20).

## Claims

1. Instrumented rolling bearing device comprising a rotating portion with at least one race, a non-rotating portion with at least one race, and an assembly for detecting rotation parameters comprising an encoder (8) and a sensor (7) integral with said non-rotating portion and provided with a detection portion (9) mounted on a race of the non-rotating portion, the detection portion comprising a sensor unit (10) and being connected to a transmission cable (12), **characterized in that** the sensor comprises at least one reception microcoil (20) and one transmission microcoil (19), both with substantially flat winding, the said microcoils being placed on a support (17) of a circuit (18) mounted in the sensor unit (10) of the non-rotating portion so that the said microcoils come axially opposite the encoder (8), the support (17) being a printed circuit substrate, the said transmission microcoil (19) surrounding the reception microcoil or microcoils (20).

2. Device according to Claim 1, **characterized in that** it comprises a plurality of substantially radial coplanar reception microcoils.

3. Device according to Claim 1, **characterized in that** it comprises a plurality of reception microcoils placed on a plurality of parallel radial planes.

4. Device according to any one of the preceding claims, **characterized in that** it comprises a plurality of microcoils linked together in pairs (24, 25) in order to generate a differential signal.

5. Device according to any one of the preceding claims, **characterized in that** the encoder comprises an encoder wheel whose active zone is made of an electrically conducting metal.

6. Device according to any one of the preceding claims, **characterized in that** the encoder comprises an encoder wheel with windows or with teeth attached to a rotating race (3) of the antifriction bearing.

7. Device according to any one of Claims 1 to 5, **characterized in that** the encoder comprises a printed circuit whose annular substrate is provided with metallized sectors and nonmetallized sectors.

8. Device according to Claim 7, **characterized in that** the printed circuit is mounted on a rotating race of the bearing.

9. Device according to any one of the preceding claims, **characterized in that** at least one portion of the encoder is placed in the space situated between the bearing races.

10. Device according to any one of the preceding claims, **characterized in that** the encoder is placed outside the space situated between the bearing races.

11. Device according to any one of the preceding claims, **characterized in that** the sensor unit is annular.

12. Device according to any one of Claims 1 to 10, **characterized in that** the sensor unit occupies an angular sector of less than 360°.

13. Electric motor comprising a rotor, a stator, at least one rolling bearing (1) supporting the rotor, and an assembly for detecting rotation parameters comprising an encoder (8) and a sensor (7) provided with a detection portion (9) mounted on a race of the non-rotating portion, the detection portion comprising a sensor unit (10) and being connected to a transmission cable (12), **characterized in that** the sensor (7) comprises at least one reception microcoil (20) and one transmission microcoil (19), both with substantially flat winding, the said microcoils being placed on a support (17) of a circuit (18) mounted in the sensor unit (10) integral with the stator so that the said microcoils come axially opposite the encoder, the support (17) being a printed circuit substrate, the said transmission microcoil (19) surrounding the reception microcoil or microcoils (20).

## Patentansprüche

1. Wälzlagereinrichtung mit Messanordnung, zu der gehören: ein umlaufender Abschnitt mit wenigstens einem Ring, ein stillstehender Abschnitt mit wenigstens einem Ring und eine Anordnung zum Erfassen von Rotationsparametern, die einen Impulsgeber (8) und einen Aufnehmer (7) enthält, der starr mit dem stillstehenden Abschnitt verbunden und mit einem Sensorabschnitt (9) versehen ist, der an einem Ring des stillstehenden Abschnitts angebracht ist, wobei der Sensorabschnitt einen Signalaufnehmer (10) aufweist und mit einem Übertragungskabel (12) verbunden ist, **dadurch gekennzeichnet, dass** der Aufnehmer wenigstens eine Mikroempfangspule (20) und eine Mikrosendespule (19) enthält, die beide im Wesentlichen eben aufgewickelt sind, wobei die Mikrospulen auf einem Träger (17) eines Schaltkreises (18) angeordnet sind, der in dem Signalaufnehmer (10) des stillstehenden Abschnitts angebracht ist, so dass die Mikrospulen dem Impulsgeber (8) axial gegenüber zu liegen kommen, wobei der Träger (17) ein Substrat einer gedruckten Schaltung ist und die Mikrosendespule (19) die Mikroempfangspule(n) (20) umgibt.

2. Einrichtung nach Anspruch 1, **dadurch gekennzeichnet, dass** die Einrichtung mehrere im Wesentlichen koplanare radiale Mikroempfangsspulen enthält.

3. Einrichtung nach Anspruch 1, **dadurch gekennzeichnet, dass** die Einrichtung mehrere Mikroempfangsspulen enthält, die in mehreren parallelen Radialebenen angeordnet sind.

4. Einrichtung nach einem der vorhergehenden Ansprüche, **dadurch gekennzeichnet, dass** die Einrichtung mehrere paarweise zugeordnete Mikrospulen (24, 25) enthält, um ein differentielles Signal hervorzurufen.

5. Einrichtung nach einem der vorhergehenden Ansprüche, **dadurch gekennzeichnet, dass** der Impulsgeber ein Kodierrad enthält, dessen aktiver Bereich aus einem elektrisch leitenden Metall hergestellt ist.

6. Einrichtung nach einem der vorhergehenden Ansprüche, **dadurch gekennzeichnet, dass** der Impulsgeber ein mit Fenstern oder Zähnen ausgebildetes Kodierrad enthält, das an einem umlaufenden Ring (3) des Wälzlagers befestigt ist.

7. Einrichtung nach einem der Ansprüche 1 bis 5, **dadurch gekennzeichnet, dass** der Impulsgeber eine gedruckte Schaltung aufweist, deren ringförmiges Substrat mit metallisierten Sektoren und mit nicht metallisierten Sektoren ausgebildet ist.

8. Einrichtung nach Anspruch 7, **dadurch gekennzeichnet, dass** die gedruckte Schaltung an einem umlaufenden Ring des Wälzlagers angebracht ist.

9. Einrichtung nach einem der vorhergehenden Ansprüche, **dadurch gekennzeichnet, dass** wenigstens ein Abschnitt des Impulsgebers in dem zwischen den Lagerringen vorhandenen Raum angeordnet ist.

10. Einrichtung nach einem der vorhergehenden Ansprüche, **dadurch gekennzeichnet, dass** der Impulsgeber außerhalb des zwischen den Lagerringen angeordneten Raums angeordnet ist.

11. Einrichtung nach einem der vorhergehenden Ansprüche, **dadurch gekennzeichnet, dass** der Signalaufnehmer ringförmig ist.

12. Einrichtung nach einem der Ansprüche 1 bis 10, **dadurch gekennzeichnet, dass** der Signalaufnehmer einen Winkelsektor besetzt, der kleiner als 360□ ist.

13. Elektromotor, zu dem gehören: ein Anker, ein Stator, wenigstens ein Ankertraglager (1) und eine Anordnung zum Erfassen von Rotationsparametern, die einen Impulsgeber (8) und einen Aufnehmer (7) enthält, der mit einem Sensorabschnitt (9) versehen ist und der an einem Ring des stillstehenden Abschnitts angebracht ist, wobei der Sensorabschnitt einen Signalaufnehmer (10) aufweist und mit einem Übertragungskabel (12) verbunden ist, **dadurch gekennzeichnet, dass** der Aufnehmer (7) wenigstens eine Mikroempfangspule (20) und eine Mikrosendespule (19) enthält, die beide im Wesentlichen eben aufgewickelt sind, wobei die Mikrospulen auf einem Träger (17) eines Schaltkreises (18) angeordnet sind, der in dem Signalaufnehmer (10) angebracht ist, der so an dem Stator befestigt ist, dass die Mikrospulen dem Impulsgeber axial gegenüber zu liegen kommen, wobei der Träger (17) ein Substrat einer gedruckten Schaltung ist und die Mikrosendespule (19) die Mikroempfangspule(n) (20) umgibt.
